# EUROPEAN PATENT APPLICATION

(11) **EP 1 549 059 A2**
(43) Date of publication of application: **29.06.2005**
(21) Application number: 04019614.9
(22) Date of filing: 18.08.2004
(51) Int. Cl.: H04N 5/76

(54) **Optical disk apparatus**

(30) Priority: 26.12.2003 JP 2003434657
(71) Applicant: Kabushiki Kaisha Toshiba, Tokyo 105-8001 (JP)
(72) Inventor: Yamamuro, Mikio, 1-1-1 Shibaura Minato-ku Tokyo 105-8001 (JP)
(74) Representative: Henkel, Feiler & Hänzel

(57) **Abstract**

A DVD-RAM recorder (1) includes a disk drive (113) which records information on an optical disk (D) or plays back information, a temporary recording unit (115) temporarily holds the information recorded on the optical disk by the disk drive (113) or information played back from the optical disk, and an MPU (101) which switches between information recording and information playback by the disk drive every predetermined time and, when a response corresponding to a result of instruction of information playback or information recording is not returned in a predetermined time, imposes a predetermined limitation on information playback. When one of the playback system and recording system executes an unstable processing operation during time-shift playback, priority is given to the recording operation. Accordingly, at least the probability of any loss in data in recording can be reduced.

## Description

The present invention relates to an information recording/playback apparatus and information recording/playback method, which record new information while playing back information recorded on a recording medium represented by an optical disk.

Along with the recent spread of direct digital broadcasting by satellite, high-quality digital video or audio signals are supplied from various sources.

As recording apparatuses capable of directly recording the high-quality digital video or audio signals, DVD-RAM recorders are becoming increasingly common. They use random-access DVD-RAM disks based on the DVD standard as a recording medium.

Jpn. Pat. Appln. KOKAI Publication No. 7-212713 has proposed a DVD-RAM recorder having a time-shift playback function. This function allows playback of already recorded video or audio data from an arbitrary position independently of the stream of time. For example, during recording of video or audio data, the data which is just being recorded can be played back from an arbitrary position.

To play back already recorded video or audio data from an arbitrary position while recording it by using the time-shift playback function, for example, the controller sequentially issues a recording command and a playback command to the optical disk unit. Accordingly, the recording operation and playback operation are switched every predetermined time.

However, if an error occurs in the optical disk unit, and playback processing for already recorded information is delayed, the recording operation for information to be newly recorded may also be delayed, and a loss in recording data (recording error) may occur.

According to an aspect of the present invention, there is provided an information recording/playback apparatus comprising: an information recording/playback unit which records information on a recording medium and plays back information from the recording medium; a temporary recording unit which temporarily holds one of the information recorded on the recording medium by the information recording/playback unit and the information played back from the recording medium by the information recording/playback unit; and a recording/playback control unit which switches between information recording and information playback by the information recording/playback unit every predetermined time and, when a response corresponding to a result of instruction of one of information playback and information recording is not returned in a predetermined time, imposes a predetermined limitation on information playback.

According to another aspect of the present invention, there is provided an information recording/playback method of recording information on a recording medium and playing back, from the recording medium, information already recorded on the recording medium every predetermined period, comprising: monitoring a response time for one of a recording instruction and a playback instruction from an information recording/playback unit for each switching instruction which switches between a recording instruction of information on the recording medium and a playback instruction of information from the recording medium every predetermined time; when the response for one of the recording instruction and the playback instruction from the information recording/playback unit is not returned in a predetermined time, determining which of the recording instruction and the playback instruction is a next instruction; when the next instruction is the recording instruction, directly outputting the recording instruction; and when the next instruction is the playback instruction, changing an output timing of the playback instruction or stopping output of the playback instruction.

According to a further another aspect of the present invention, there is provided an information recording/playback method of recording information and playing back already recorded information at an arbitrary timing when information recording and playback are instructed every predetermined period, comprising: switching between the playback operation of information from a recording medium and the recording operation of information on the recording medium in accordance with one of an information recording instruction and an information playback instruction, which are switched every predetermined time; when information playback is instructed, and information which should be played back cannot be output within a predetermined time, outputting a response representing that output of the playback information should be stopped or the information cannot be played back; and when only information recording is instructed for the response representing that output of the playback information should be stopped or the information cannot be played back, temporarily stopping playback of the information from the recording medium for a predetermined period.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram for explaining an example of an optical disk apparatus to which the embodiment of the present invention is applied;
FIG. 2 is a flowchart for explaining an example of the operation of the information recording/playback apparatus shown in FIG. 1; and
FIG. 3 is a flowchart for explaining an example of the operation of the information recording/playback apparatus shown in FIG. 1.

The embodiment of the present invention will be described below in detail with reference to the accompanying drawing.

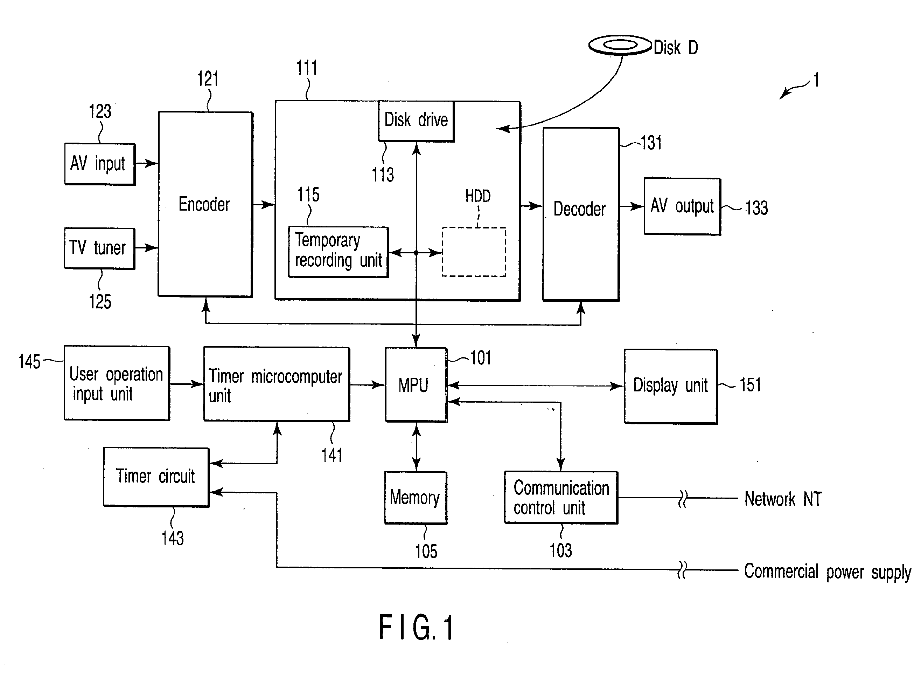

An information recording/playback apparatus, i.e., a DVD-RAM recorder 1 shown in FIG. 1 has an information recording/playback unit 111 and a microcomputer (MPU, i.e., main control device) 101. The information recording/playback unit 111 can record received information on a random-access DVD-RAM disk (recording medium) D based on the Digital Versatile Disk (DVD) standard and play back already recorded information in accordance with a playback request. The microcomputer 101 controls recording to the information recording/playback unit 111, playback from the information recording/playback unit 111, and the operations of units to be described below.

The information recording/playback unit 111 includes a disk drive unit 113 and a temporary recording unit 115. The disk drive unit 113 can record information on, e.g., the random-access DVD-RAM disk D which is manufactured in accordance with the DVD standard and play back information already recorded on a disk. The temporary recording unit 115 functions as a buffer memory capable of temporarily holding a predetermined amount of data which is to be recorded on the disk D set in the disk drive unit 113 or is played back from the disk D.

When the recording capacity of the disk D becomes zero halfway during recording of information, the temporary recording unit 115 can be used to temporarily store information to be recorded until the disk currently used for information recording is exchanged with another disk having a recording capacity.
The information recording/playback unit 111 may include, e.g., a hard disk drive HDD suitable for recording and search (playback) of mass storage information in addition to the disk drive unit 113.

An encoder 121 and a decoder 131 are connected to the information recording/playback unit 111. The encoder 121 encodes received information such that the information recording/playback unit 111 can record it. The decoder 131 decodes information output from the information recording/playback unit 111 such that an output apparatus to be described below can display it.

An AV input unit 123 and a tuner unit 125 are connected to the encoder 121. The AV input unit 123 can receive information to be recorded from an external device. The tuner unit 125 can receive video or audio signals broadcast from information broadcasters.

An AV output unit 133 which supplies playback information decoded (by the decoder 131) to an output apparatus represented by a playback apparatus (TV set) or monitor apparatus is connected to the decoder 131.

A timer microcomputer unit 141 is connected to the MPU 101. The timer microcomputer unit 141 can input, from the main body of the recording/playback apparatus 1 or an accompanying remote controller (not shown), scheduled recording information containing, e.g., recording (broadcast) start date/time, recording (broadcast) end date/time, recording source, recording rate, and recording mode (audio recording format) (to be referred to as scheduled recording hereinafter).

A timer circuit (timepiece unit) 143 and a user operation input unit 145 are connected to the timer microcomputer unit 141. The timer circuit 143 manages time to be used for management of the operation of the recording/playback apparatus 1. The user operation input unit 145 receives an operation request (instruction) from a user.

A display unit 151, a communication control unit 103, and a memory 105 are also connected to the MPU 101. The display unit 151 displays information input to the timer microcomputer unit 141 or the operation state of the main body of the apparatus 1. The communication control unit 103 can receive a recording schedule from an external device through a network NT or notify a designated return destination of a scheduled recording enable/disable state. The memory 105 can hold scheduled recording information.

The MPU 101 controls, in accordance with a control program stored in the memory 105, information recording on the disk D, information deletion from the disk D, playback of information recorded on the disk D, time-shift playback, i.e., switching between the recording operation and playback operation every predetermined time, change of operation of the recording/playback apparatus, which is input to the timer microcomputer unit 141 through the user operation input unit 145, and display for the user by using the display unit 151.

The timer microcomputer unit 141 manages scheduled recording information set by the user while monitoring the timer circuit (timepiece unit) 143. At the scheduled recording start time, the timer microcomputer unit 141 instructs the MPU 101 to start recording. At the scheduled recording end time, the timer microcomputer unit 141 instructs the MPU 101 to end recording.

The user operation input unit 145 can receive an operation request from the user and, for example, a change of operation of the recording/playback apparatus or scheduled recording information. The user operation input unit 145 includes a data reception unit and a control signal input unit (neither are shown). The data reception unit receives a control signal from a remote controller (remote control terminal). The control signal input unit can output a control signal to the timer microcomputer unit 141 in accordance with a direct input instruction from the user through the operation panel (not shown) of the main body of the apparatus 1.

In other words, the information recording/playback apparatus of the present invention including an information recording/playback unit (disk drive 113) which records information on a recording medium (disk D) and plays back information from the recording medium, a temporary recording unit (115) which temporarily holds one of the information recorded on the recording medium by the information recording/playback unit and the information played back from the recording medium by the information recording/playback unit, and a recording/playback control unit (MPU 101) which switches between information recording and information playback by the information recording/playback unit every predetermined time and, when a response corresponding to a result of instruction of one of information playback and information recording is not returned in a predetermined time, imposes a predetermined limitation on information playback.

An example of the operation of the information recording/playback apparatus 1 schematically shown in FIG. 1 will be described next.

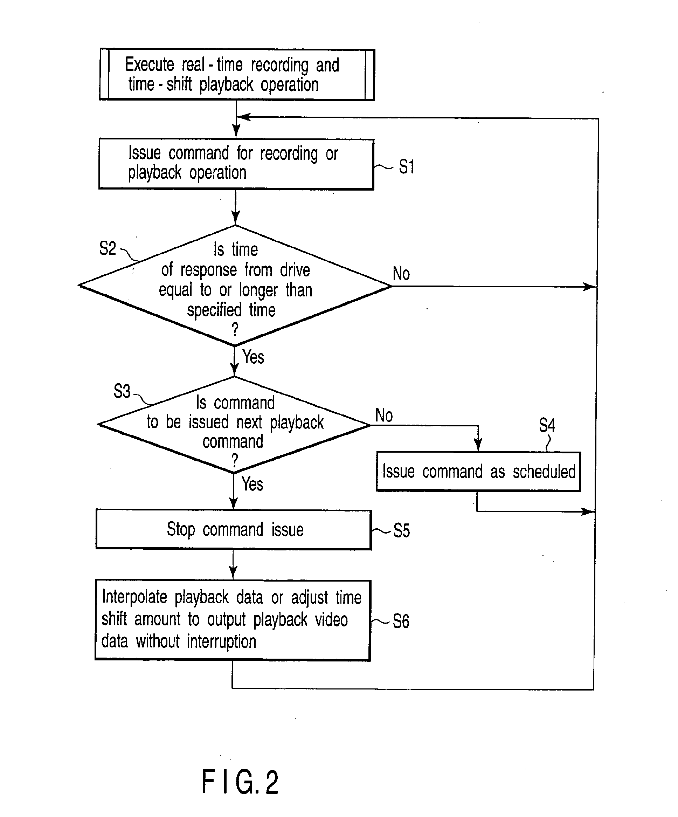

As shown in FIG. 2, when the user instructs (requests), e.g., "real-time recording and time-shift playback", the MPU (host device or disk controller) 101 issues a command for recording or playback operation to the information recording/playback unit, i.e., optical disk apparatus 111 (S1).

It is checked whether a not a response, e.g., a processing completion command is returned from the drive device, i.e., information recording/playback unit 111 within a specified time whether it has taken a time equal to or more than the specified time until return of the processing completion command (S2).

If it is determined in step S2 that the response from the information recording/playback unit 111 is returned within the specified time (NO in step S2), the flow returns to step S1 as the normal routine, and the next command is issued.

If it is determined in step S2 that it has taken a time equal to or more than the specified time until return of the processing completion command from the information recording/playback unit 111 (YES in step S2), the type of command to be issued next is specified (S3).

If it is determined in step S3 that the command to be issued next is "record (non-playback)" (NO in step S3), the command is issued as scheduled in accordance with the normal routine (S4). Subsequently, the next command ("record" command) is issued in step S1 (NO in step S3).

If it is determined in step S3 that the command to be issued next is "playback" (YES in step S3), the issue of the "playback" command is stopped to avoid any influence of the processing time which has been required longer than usual until return of the processing completion command in step S2 (S5). "Time-shift playback delay recovery processing" represented by playback data interpolation (playback information corresponding to playback information which should be obtained when the playback command is issued as usual is generated from preceding playback data which is already played back), time shift amount adjustment, or pause of playback output is executed (S6).

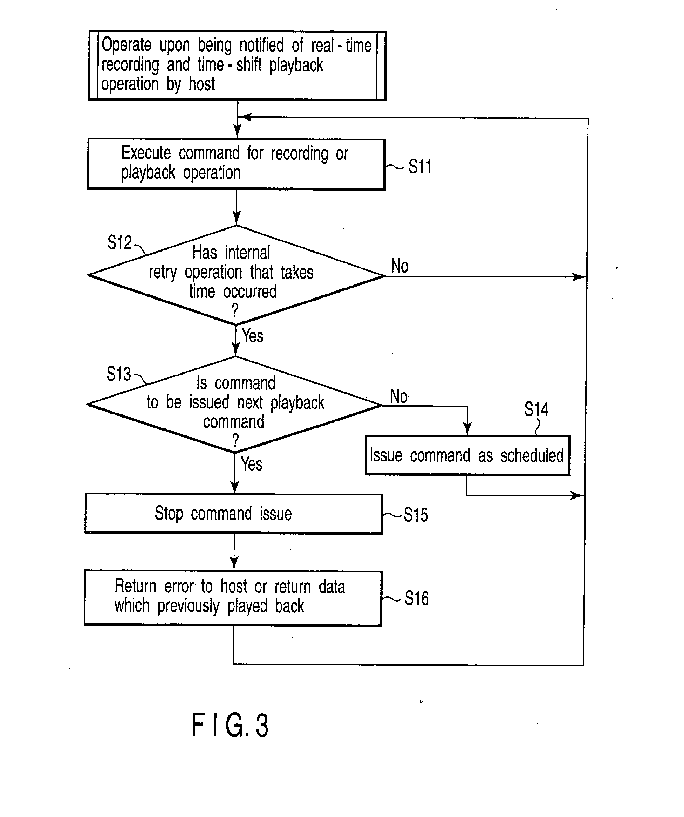

FIG. 3 shows the operation of the information recording/playback unit (drive device), which corresponds to the "record" command or "playback" command from the host device (MPU or disk controller) described with reference to FIG. 2.

As shown in FIG. 3, when "real-time recording and time-shift playback" is instructed from the host device (MPU or disk controller), the information recording/playback unit 111 executes one of arbitrary operations such as the "recording operation", "playback operation", and "erase operation" to execute the command (S11).

In step S11, the received arbitrary operation is executed. In addition, it is checked whether the time required for that operation is equal to or more than a specified time (whether a "retry" operation which may increase the processing (operation) time more than the specified time has occurred) (S12).

If it is determined in step S12 that a response from the information recording/playback unit 111 is returned within the specified time (a "retry" operation which may increase the processing (operation) time more than the specified time has not occurred) (NO in step S12), the flow returns to step S11 as the normal routine to request a command to be executed next.

If it is determined in step S12 that a time equal to or more than the specified time has been required until return of the processing completion command from the information recording/playback unit 111 (a "retry" operation which may increase the processing (operation) time more than the specified time has occurred) (YES in step S12), the type of command to be issued (executed) next is checked (S13).

If it is determined in step S13 that the command to be executed next is "record" (NO in step S13), a "record" command is requested in accordance with the normal routine (S14). Subsequently, in step S11, the command to be executed next is issued (NO in step S13).

If it is determined in step S13 that the command to be executed next is "playback" (YES in step S13), the "playback" operation corresponding to the "playback" command is stopped to avoid the influence of processing time that is longer than usual because a time equal to or more than the specified time has been required until return of the processing completion command (a "retry" operation which may increase the processing (operation) time more than the specified time has occurred) in step S12 (S15). In addition, "playback data that was previously played back" or an error command which makes a predetermined signal sequence representing that retry is overtime or that the area to be played back cannot be specified (read) correspond to an error code stored in a program memory (not shown) is output to the host device (S16).

The "playback data that was previously played back", which is supplied again in step S16 is, e.g., playback data which was read by executing the immediately preceding "playback" command and left in the temporary recording unit 115 without being rewritten.

Even when the retry operation has occurred, if information at the portion where the "playback operation" has been stopped can be interpolated by using part or all of the "playback data that was previously played back", which is held by the temporary recording unit 115, the playback information can be interpolated and output on the host side.

More specifically, the individual operations described with reference to FIGS. 2 and 3 are executed by the temporary recording unit 115 in the information recording/playback unit 111 shown in FIG. 1.

In the time-shift operation described with reference to FIGS. 2 and 3, both data to be recorded on the disk D set in the disk drive 113 and data played back from the disk D are temporarily stored in the temporary recording unit 115.characterized by comprising,

For example, a video signal received via the TV tuner 125 is converted into data recordable on the optical disk D through the encoder 121. The data amount is determined by the video compression rate of the encoder 121. If the video compression rate is, e.g., 4.6 Mbps, the data amount is 4.6 Mbits per sec.

For example, when the capacity of the temporary recording unit 115 is 46 Mbits, it can temporarily store data for 10 sec.

In this environment, the video signal sequentially received from the TV tuner 125 is converted into data for 5 sec, i.e., 23-Mbit data by the encoder 121, stored in the temporary recording unit 115, and written in the buffer memory (not shown) in the disk drive 113.

When the disk drive 113 can execute, e.g., X2 recording on a DVD-RAM disk based on the DVD standard, the recording/transfer rate is 22.16 Mbps. Hence, the 23-Mbit data written in the buffer memory (not shown) in the disk drive 113 is recorded on the DVD-RAM disk (disk D) in about 1 sec.

Simultaneously, while the 23-Mbit data in the buffer memory (not shown) in the disk drive 113 is recorded on the disk D in 1 sec, data obtained by encoding a video signal subsequently supplied from the TV tuner 125 is sequentially stored in a predetermined recording area of the temporary recording unit 115.

The playback data read out from the disk D to the buffer memory (not shown) in the disk drive 113 in accordance with the time-shift playback request is overwritten in, e.g., the memory area which has been occupied by the data recorded on the disk D since some time ago. The playback data read out from the disk D to the buffer memory is data for 5 sec, i.e., 23-Mbit data per sec, as in recording.

The data stored on the disk D is thus output to the decoder 131 and decoded into output video data.

As described above, in, e.g., time-shift playback, the write on the disk D, the read from the disk D, and the playback and recording operations for time-shift playback must be completed within a time after data half the amount recordable in the temporary recording unit 115 or the buffer memory (not shown) prepared for time-shift playback is supplied through the encoder 121 until the next half recording data is supplied to the remaining memory area. Under the above-described conditions, the time which can be allotted to the playback and recording operations for time-shift playback is 3 sec. That is, in the embodiment of the present invention, this time corresponds to the "specified time for the operation" in step S12 in FIG. 3.

The "specified time" is preferably set to half the above time, i.e., 1.5 sec or less in consideration of the possibility that both "recording" and "playback" can delay for the same reason during the above-described "specified time for the operation (the time when the recording/playback operation is being delayed)".

In other words, the threshold value at which the "recording" or "playback" operation requires the "time equal to or more than the specified time" in time-shift playback is set to half or less the time obtained by subtracting the time required for data transfer from the buffer memory or temporary recording unit to the optical disk and data transfer from the optical disk to the buffer memory or temporary recording unit from the time corresponding to the time when the amount of data supplied from the encoder to the buffer memory or temporary recording unit is half the capacity of the buffer memory or temporary recording unit.

As described above, in the optical disk apparatus (information recording/playback unit), by the time-shift playback function which plays back already recorded information from an arbitrary position at an arbitrary timing while recording real-time data, the recording operation and playback operation are switched every predetermined time to execute information recording and playback. If a certain operation error or abnormal operation occurs in the drive device (information recording/playback unit) during this time, priority is given to the "recording operation". With this processing, at least any loss in recorded information can be prevented. In the playback operation, priority can also be given to information recording even by instantaneously interrupting playback.

More specifically, when priority is given to information recording, information which is being recorded currently can accurately be recorded. On the other hand, information which is being played back by the time-shift playback function can have no problem in a normal playback mode. A loss in information which is being recorded poses a more serious problem for the user. As in the present invention, if one of the recording and playback operations which are switched at an arbitrary timing takes a long time, priority is given to at least recording. In this case, the number of errors recognized by the user is expected to be small.

The technique for detecting prolongation of operation time and stopping the playback operation can arbitrarily be selected from, e.g., the following methods.
1) The host side which supplies a predetermined command to the optical disk drive (information recording/playback unit) determines that the response from the optical disk drive for the issued command is delayed from a predetermined timing. In this case, issue of a playback command for time-shift playback is stopped to ensure a sufficient time for the recording operation of the optical disk drive. With this processing, the accuracy of information recorded as real-time data can be increased. Even when a loss in playback data occurs, data corresponding to the playback data in shortage is interpolated from previously acquired playback data, or the time shift amount is adjusted.
2) If retry that requires time occurs, the optical disk drive side immediately returns an error in response to the playback command from the host side, thereby ensuring the operation time usable for information recording. Accordingly, the accuracy of recorded information can be increased. Even when a loss in playback data occurs, data corresponding to the playback data in shortage is interpolated from previously acquired playback data.
3) If retry that requires time occurs, the optical disk drive side omits the playback operation and transfers the same data as in preceding transfer as a response to the playback command.

If "retry" has occurred a predetermined number of times or more during time-shift playback, arbitrary warning information representing that, e.g., "the preceding recording state is unstable", "an optical disk whose recording state is unstable is being played back", or "time-shift playback should be stopped to give priority to the recording operation" may be displayed on, e.g., the display unit 151 or the display unit of the remote controller (not shown).

If "retry" has occurred a predetermined number of times or more during time-shift playback, and the playback image breaks an arbitrary number of times (playback stops or is executed intermittently) in a predetermined time, a message such as "the preceding recording state is unstable, and only the recording operation will be executed" may be displayed on, e.g., the display unit 151 or the display unit of the remote controller (not shown), and the information recording/playback unit 111 may be instructed to do only information recording. In this case, for example, the MPU 101 forcibly changes the control command to "record" to ensure a sufficient time for the recording operation of the drive side (information recording/playback unit). Hence, any loss in information can be prevented, and the recording accuracy can be increased.

If "retry" has occurred a predetermined number of times or more during time-shift playback, and playback stops or is executed intermittently in a predetermined time, a message such as "please exchange the disk" or "do you want to exchange the disk?" may be displayed on, e.g., the display unit 151 or the display unit of the remote controller (not shown) to notify the user that recording/playback is unstable. Accordingly, recording or stop of playback may forcibly be interrupted in the information recording/playback unit 111.

In the above-described "detection of prolongation of operation time and stop of the playback operation", for example, the error may be caused by a local abnormality on the recording area of the disk D.
In this case, setting may be done such that, for example, "only recording operation" is executed, and after the elapse of a predetermined time, "playback" and "recording" are repeated again.

As has been described above, according to the present invention, when new information is recorded while playing back already recorded information by the time-shift playback function, and one of the playback system and recording system executes an unstable processing operation, priority is given to the recording operation. Accordingly, at least any loss in data in recording can be reduced.

More specifically, if an operation that takes time for processing occurs in the optical disk apparatus during recording of real-time data, ensuring time for the recording operation takes preference. Hence, the integrity of recorded data can be maintained (the accuracy of recorded information can be increased).

If an operation that takes time for processing occurs in the optical disk apparatus during recording of real-time data, the playback operation is temporarily stopped or shipped. Accordingly, time for the recording operation can be ensured. Hence, the accuracy of recorded information can be increased.

If an operation that takes time for processing occurs in the optical disk apparatus during recording of real-time data, this state is detected on the host side. Accordingly, command issue for the playback operation is stopped, and time for the recording operation can be ensured. Hence, the accuracy of recorded information can be increased.

If it is detected in the optical disk apparatus that the processing time exceeds a predetermined time, an error response is output for a playback command. Accordingly, the playback operation is temporarily stopped or its timing is changed to ensure time for the recording operation. Hence, the accuracy of recorded information can be increased.

If it is detected in the optical disk apparatus that the processing time exceeds a predetermined time, playback is stopped, and existing data is returned in response to a playback command to ensure time for the recording operation. Hence, the accuracy of recorded information can be increased.

If a command representing real-time recording is issued from the host to the optical disk apparatus, a predetermined limitation is imposed, on the optical disk apparatus, to the playback operation in accordance with the situation to ensure the recording time for real-time recording. Accordingly, at least the recording accuracy of information can be increased.

As described above, according to the information recording/playback apparatus of the present invention, when new information is recorded while playing back already recorded information by the time-shift playback function, and one of the playback system and recording system executes an unstable processing operation, priority is given to the recording operation. Accordingly, at least any loss in data in recording can be reduced.

The above-described "detection of prolongation of operation time and stop of the playback operation" can also be applied to, e.g., an HDD (hard disk) regardless of the type of recording medium.

The present invention is not limited to the embodiments described above and can be modified in various manners without departing from the spirit and scope of the invention. The embodiments may appropriately be combined as much as possible. In this case, an effect by the combination can be obtained.

## Claims

1. An information recording/playback apparatus (1) **characterized by** comprising:
an information recording/playback unit (113) which records information on a recording medium and plays back information from the recording medium;
a temporary recording unit (115) which temporarily holds one of the information recorded on the recording medium by the information recording/playback unit and the information played back from the recording medium by the information recording/playback unit; and
a recording/playback control unit (101) which switches between information recording and information playback by the information recording/playback unit every predetermined time and, when a response corresponding to a result of instruction of one of information playback and information recording is not returned in a predetermined time, imposes a predetermined limitation on information playback.

2. An apparatus according to claim 1, **characterized in that** the limitation imposed on information playback by the recording/playback control unit is one of temporary stop and abort of a playback operation.

3. An apparatus according to claim 1, **characterized in that** when one of temporary stop and abort of the information playback operation is executed by the recording/playback control unit, the recording/playback control unit interpolates information in shortage by one of temporary stop and abort of the playback operation by using part of information which is already played back.

4. An information recording/playback method of recording information on a recording medium and playing back, from the recording medium, information already recorded on the recording medium every predetermined period, **characterized by** comprising:
monitoring a response time for one of a recording instruction and a playback instruction from an information recording/playback unit for each switching instruction which switches between a recording instruction of information on the recording medium and a playback instruction of information from the recording medium every predetermined time;
when the response for one of the recording instruction and the playback instruction from the information recording/playback unit is not returned in a predetermined time, determining which of the recording instruction and the playback instruction is a next instruction;
when the next instruction is the recording instruction, directly outputting the recording instruction; and
when the next instruction is the playback instruction, changing an output timing of the playback instruction or stopping output of the playback instruction.

5. A method according to claim 4, **characterized in that** when the output timing of the playback instruction is changed or output of the playback instruction is stopped, information in shortage caused by the change in the output timing of the playback instruction or the stop of output of the playback instruction is interpolated by using part of information which is already played back, or the playback operation is temporarily stopped.

6. An information recording/playback method of recording information and playing back already recorded information at an arbitrary timing when information recording and playback are instructed every predetermined period, **characterized by** comprising:
switching between the playback operation of information from a recording medium and the recording operation of information on the recording medium in accordance with one of an information recording instruction and an information playback instruction, which are switched every predetermined time;
when information playback is instructed, and information which should be played back cannot be output within a predetermined time, outputting a response representing that output of the playback information should be stopped or the information cannot be played back; and
when only information recording is instructed for the response representing that output of the playback information should be stopped or the information cannot be played back, temporarily stopping playback of the information from the recording medium for a predetermined period.

7. A method according to claim 6, **characterized in that** when playback of the information from the recording medium is temporarily stopped, part or all of information which is already played back and held in advance is output again.
